# EUROPÄISCHE PATENTSCHRIFT

(11) **EP 2 992 225 B1**
(45) Veröffentlichungstag und Bekanntmachung des Hinweises auf die Patenterteilung: **03.01.2018**
(21) Anmeldenummer: 14719299.1
(22) Anmeldetag: 22.04.2014
(51) Int. Cl.: F16B 12/20, E05B 63/12, E05B 15/00, F16B 5/00

(54) **VERBINDUNGSMITTEL**
CONNECTING MEANS
MOYEN DE LIAISON

(30) Priorität: 30.04.2013 DE 102013207966
(43) Veröffentlichungstag der Anmeldung: 09.03.2016
(73) Patentinhaber: Lamello AG, 4416 Bubendorf (CH); Baur, Franz, 87534 Oberstaufen (DE); Haser, Franz, 87534 Oberstaufen (DE)
(72) Erfinder: BAUR, Franz, 87534 Oberstaufen (DE); HASER, Franz, 87534 Oberstaufen (DE); SEILER, Philipp, CH-4424 Arboldswil (CH); JEKER, Patrick, CH-4225 Brislach (CH)
(74) Vertreter: Hoeger, Stellrecht & Partner Patentanwälte mbB
(86) Internationale Anmeldenummer: PCT/EP2014/058163
(87) Internationale Veröffentlichungsnummer: WO 2014/177425

(56) Entgegenhaltungen:
- EP-A1- 1 990 549
- BE-A- 508 737
- DE-A1- 10 045 744
- DE-C- 931 727

## Beschreibung

Die vorliegende Erfindung betrifft ein Verbindungsmittel zum Verbinden eines ersten Bauteils und eines zweiten Bauteils, insbesondere zum Verbinden von Möbel- oder Maschinenteilen, umfassend ein im verbundenen Zustand der Bauteile an dem ersten Bauteil angeordnetes erstes Verbindungselement und ein im verbundenen Zustand der Bauteile an dem zweiten Bauteil angeordnetes zweites Verbindungselement, wobei das erste Verbindungselement einen Grundkörper und ein relativ zu dem Grundkörper des ersten Verbindungselements bewegliches Halteelement zum lösbaren Verbinden des ersten Verbindungselements mit dem zweiten Verbindungselement umfasst, wobei das bewegliche Halteelement eine erste Haltekontur umfasst, wobei das zweite Verbindungselement eine zweite Haltekontur umfasst, welche mit der ersten Haltekontur hintergreifbar ist.

Ein solches Verbindungsmittel ist beispielsweise aus der EP 1 990 549 A1 bekannt.

Die DE 100 45 744 A1 offenbart eine Verriegelungsvorrichtung für Konstruktionen aus Profilstäben.

Die BE 508 737 und die DE 931 727 offenbaren verschiedene Verbindungselemente für den Möbelbau.

Der vorliegenden Erfindung liegt die Aufgabe zugrunde, ein Verbindungsmittel der eingangs genannten Art bereitzustellen, mittels welchem zwei Bauteile besonders zuverlässig und stabil miteinander verbindbar sind.

Diese Aufgabe wird bei dem eingangs genannten Verbindungsmittel erfindungsgemäß durch die Merkmale des kennzeichnenden Teils von Anspruch 1 gelöst.

Dadurch, dass erfindungsgemäß das Verbindungsmittel mindestens ein Abstützelement zum Abstützen der zweiten Haltekontur im verbundenen Zustand der Bauteile umfasst, kann einer unerwünschten Deformation des Verbindungsmittels entgegengewirkt werden, so dass die zwei Bauteile zuverlässig und stabil miteinander verbindbar sind.

Unter einem Abstützen der zweiten Haltekontur ist in dieser Beschreibung und den beigefügten Ansprüchen insbesondere ein Aufnehmen einer Druckkraft mittels des mindestens einen Abstützelements zu verstehen, wobei das mindestens eine Abstützelement vorzugsweise bezüglich einer Druckkraftrichtung (Abstützrichtung) hinter dem abzustützenden Element, insbesondere hinter der zweiten Haltekontur, angeordnet ist.

Mittels des Abstützelements wird vorzugsweise eine Bewegung der zweiten Haltekontur in Richtung des Abstützelements verhindert oder zumindest erschwert.

Günstig kann es sein, wenn das erste Verbindungselement mindestens ein Abstützelement zum Abstützen der zweiten Haltekontur im verbundenen Zustand der Bauteile umfasst.

Alternativ oder ergänzend hierzu kann vorgesehen sein, dass das zweite Verbindungselement mindestens ein Abstützelement zum Abstützen der zweiten Haltekontur im verbundenen Zustand der Bauteile umfasst.

Mindestens ein Abstützelement ist vorzugsweise als ein Abstützvorsprung eines Grundkörpers des ersten Verbindungselements ausgebildet.

Alternativ oder ergänzend hierzu kann vorgesehen sein, dass mindestens ein Abstützelement als ein Abstützvorsprung eines Grundkörpers des zweiten Verbindungselements ausgebildet ist.

Der Grundkörper eines Verbindungselements ist insbesondere ein Gehäuse des Verbindungselements.

Es kann vorgesehen sein, dass mindestens ein Abstützvorsprung sich ausgehend von dem Grundkörper in mindestens einer senkrecht zu einer Vorsprungsrichtung, insbesondere einer Verbindungsrichtung, ausgerichteten Richtung verjüngt.

Bei einer Ausgestaltung der Erfindung ist vorgesehen, dass die zweite Haltekontur mittels des mindestens einen Abstützelements in einer Querrichtung des Verbindungsmittels abstützbar ist.

Eine Querrichtung des Verbindungsmittels ist insbesondere eine quer, insbesondere senkrecht, zu einer Verbindungsrichtung des Verbindungsmittels ausgerichtete Richtung.

Die Verbindungsrichtung des Verbindungsmittels ist insbesondere diejenige Richtung, in welcher die Verbindungselemente aufeinander zubewegt werden, um die Verbindungselemente und somit die Bauteile miteinander zu verbinden.

Die Verbindungsrichtung ist insbesondere senkrecht zu Anlegeflächen der Verbindungselemente ausgerichtet. Die Anlegeflächen sind dabei diejenigen Flächen der Verbindungselemente, mit welchen die Verbindungselemente im verbundenen Zustand aneinander anliegen.

Die zweite Haltekontur ist mittels des mindestens einen Abstützelements vorzugsweise seitlich abstützbar.

Vorteilhaft kann es sein, wenn die zweite Haltekontur mittels des mindestens einen Abstützelements in einer Abstützrichtung abstützbar ist, welche im Wesentlichen parallel zu einer Rotationsachse des Halteelements ausgerichtet ist.

Das Halteelement ist insbesondere schwenkbar an dem ersten Verbindungselement angeordnet. Die Rotationsachse des Halteelements ist vorzugsweise im Wesentlichen senkrecht zur Verbindungsrichtung ausgerichtet.

Der Grundkörper des ersten Verbindungselements, insbesondere ein Gehäuse des ersten Verbindungselements, weist vorzugsweise eine Aufnahmeöffnung auf, durch welche das Halteelement mit einem Werkzeug, insbesondere einem Inbusschlüssel, zugänglich ist.

Die Rotationsachse des Halteelements ist vorzugsweise eine Mittelachse der Aufnahmeöffnung.

Die Aufnahmeöffnung ist insbesondere in einer Seitenwandung des Grundkörpers, insbesondere des Gehäuses, angeordnet.

Erfindungsgemäß ist vorgesehen, dass mindestens ein Abstützelement, insbesondere mindestens ein Abstützvorsprung, im verbundenen Zustand der Bauteile auf einer dem Halteelement abgewandten Außenseite des Grundkörpers des zweiten Verbindungselements angeordnet ist.

Es ist vorgesehen, dass mindestens ein Abstützelement, insbesondere mindestens ein Abstützvorsprung, im verbundenen Zustand der Bauteile auf einer dem Halteelement abgewandten Seite einer Seitenwandung angeordnet ist, in welcher die zweite Haltekontur angeordnet und/oder ausgebildet ist.

Günstig kann es sein, wenn mindestens ein Abstützelement sich im verbundenen Zustand der Bauteile in mindestens eine Abstützausnehmung und/oder in mindestens eine Abstützelementaufnahme erstreckt.

Vorteilhaft kann es sein, wenn mindestens ein Abstützelement an einem Verbindungselement angeordnet ist. Die mindestens eine zugehörige Abstützausnehmung und/oder Abstützelementaufnahme ist dann vorzugsweise an dem anderen Verbindungselement angeordnet.

Insbesondere ist vorgesehen, dass mindestens ein Abstützelement, insbesondere mindestens ein Abstützvorsprung, an dem ersten Verbindungselement angeordnet ist.

Mindestens eine Abstützausnehmung und/oder mindestens eine Abstützelementaufnahme ist vorzugsweise an dem zweiten Verbindungselement angeordnet.

Vorteilhaft kann es sein, wenn die mindestens eine Abstützausnehmung und/oder die mindestens eine Abstützelementaufnahme eine in einer Längsrichtung der Verbindungselemente größere Ausdehnung aufweist als das mindestens eine Abstützelement. Auf diese Weise kann eine Fertigungsungenauigkeit bei der Verbindung der zwei Bauteile miteinander einfach ausgeglichen werden.

Es kann vorgesehen sein, dass das zweite Verbindungselement mindestens zwei zweite Haltekonturen umfasst, welche in Seitenwandungen eines Grundkörpers des zweiten Verbindungselements eingeformt sind.

Insbesondere kann vorgesehen sein, dass jeweils eine zweite Haltekontur in jeweils eine Seitenwandung eines Grundkörpers des zweiten Verbindungselements eingeformt ist.

Die zwei zweiten Haltekonturen sind vorzugsweise auf einander zugewandten Innenseiten der zwei Seitenwandungen des Grundkörpers des zweiten Verbindungselements angeordnet.

Vorteilhaft kann es sein, wenn das bewegliche Halteelement mindestens zwei erste Haltekonturen umfasst, welche insbesondere auf einander gegenüberliegenden Seiten eines Zentralabschnitts des Halteelements angeordnet sind.

Bei einer Ausgestaltung der Erfindung kann vorgesehen sein, dass das bewegliche Halteelement mindestens zwei erste Haltekonturen umfasst und dass das zweite Verbindungselement mindestens zwei zweite Haltekonturen umfasst, welche in Seitenwandungen eines Grundkörpers des zweiten Verbindungselements eingeformt und mit den ersten Haltekonturen hintergreifbar sind, wobei das bewegliche Halteelement zwischen den zwei Seitenwandungen anordenbar oder angeordnet ist.

Insbesondere kann vorgesehen sein, dass das bewegliche Halteelement in einen Zwischenraum zwischen den zwei Seitenwandungen des Grundkörpers des zweiten Verbindungselements einbringbar und aus demselben entfernbar ist.

Ferner kann vorgesehen sein, dass das erste Verbindungselement mindestens zwei Abstützelemente umfasst, dass das bewegliche Halteelement zwischen zwei Seitenwandungen eines Grundkörpers des zweiten Verbindungselements bewegbar ist und dass die zwei Seitenwandungen, insbesondere im verbundenen Zustand, zwischen den mindestens zwei Abstützelementen anordenbar oder angeordnet sind.

Das Halteelement ist somit vorzugsweise zwischen die zwei zweiten Haltekonturen einbringbar.

Insbesondere im verbundenen Zustand der Bauteile sind das Halteelement und die zwei zweiten Haltekonturen vorzugsweise zwischen zwei Abstützelementen angeordnet, insbesondere mittels der zwei Abstützelemente seitlich abgestützt.

Eine Auslenkung der zwei zweiten Haltekonturen in einer Querrichtung (insbesondere einer Dickenrichtung) ist mittels der Abstützelemente vorzugsweise vermeidbar.

Es kann vorgesehen sein, dass mindestens ein Abstützelement über eine Anlegefläche des ersten Verbindungselements hinausragt, mit welcher das erste Verbindungselement im verbundenen Zustand an dem zweiten Verbindungselement anliegt.

Bei einer Ausgestaltung der Erfindung ist vorgesehen, dass mindestens ein Abstützelement sich zumindest näherungsweise bündig an eine Seitenwandung des ersten Verbindungselements anschließt.

Alternativ oder ergänzend hierzu kann vorgesehen sein, dass mindestens ein Abstützelement sich zumindest näherungsweise bündig an eine Seitenwandung des zweiten Verbindungselements anschließt.

Insbesondere kann vorgesehen sein, dass mindestens ein Abstützelement sich zumindest näherungsweise bündig an eine Seitenwandung des Grundkörpers des ersten Verbindungselements und/oder an eine Seitenwandung des Grundkörpers des zweiten Verbindungselements anschließt.

Es kann vorgesehen sein, dass mindestens ein Abstützelement einen zumindest näherungsweise bogenförmigen Längsschnitt und/oder Querschnitt aufweist.

Günstig kann es sein, wenn mindestens eine Abstützausnehmung und/oder mindestens eine Abstützelementaufnahme zumindest abschnittsweise und zumindest näherungsweise komplementär zu mindestens einem Abstützelement ausgebildet ist.

Es kann vorgesehen sein, dass mindestens ein Abstützelement als ein sich über die Anlegefläche hinaus erstreckender Fortsatz einer Seitenwandung eines Grundkörpers eines Verbindungselements ausgebildet ist.

Das mindestens eine Abstützelement ragt vorzugsweise in einer Querrichtung nicht über den Grundkörper eines oder beider Verbindungselemente hinaus.

Günstig kann es sein, wenn mindestens ein Abstützelement einstückig mit dem Grundkörper, insbesondere einstückig mit einer Seitenwandung des Grundkörpers, ausgebildet ist.

Insbesondere kann vorgesehen sein, dass mindestens ein Abstützelement ein Bestandteil eines Grundkörpers eines Verbindungselements ist.

Mindestens ein Grundkörper mindestens eines Verbindungselements ist vorzugsweise als ein Kunststoff-Spritzgussbauteil ausgebildet.

Günstig kann es sein, wenn das erste Verbindungselement und das zweite Verbindungselement im verbundenen Zustand der Bauteile lösbar miteinander verbunden sind.

Vorzugsweise umfasst zumindest das erste Verbindungselement ein Gehäuse und mindestens ein relativ zu dem Gehäuse des ersten Verbindungselements bewegliches Halteelement.

Es kann vorgesehen sein, dass das Halteelement in einer Haltestellung so mit dem zweiten Verbindungselement zusammenwirkt, dass eine Relativbewegung des ersten Verbindungselements und des zweiten Verbindungselements längs einer Verbindungsrichtung verhindert wird.

Insbesondere kann vorgesehen sein, dass das Halteelement in einer Freigabestellung eine Relativbewegung des ersten Verbindungselements und des zweiten Verbindungselements längs der Verbindungsrichtung zulässt.

Mindestens ein Halteelement ist vorzugsweise durch eine Einwirkung von außerhalb des Verbindungsmittels relativ zu einem Gehäuse des ersten Verbindungselements von der Haltestellung in die Freigabestellung und/oder von der Freigabestellung in die Haltestellung bewegbar.

Das Gehäuse des ersten Verbindungselements weist insbesondere eine gekrümmte Anlagefläche, die in einem Längsschnitt kreisbogenförmig ist, und eine dieser Anlagefläche gegenüberliegende im Wesentlichen ebene Anlagefläche, die an das zweite Verbindungselement anlegbar ist, auf.

Dadurch, dass vorzugsweise mindestens eines der Verbindungselemente eine gekrümmte Anlagefläche umfasst, die in einem Längsschnitt kreisbogenförmig ist, kann diese Anlagefläche an einer ebenfalls im Längsschnitt kreisbogenförmigen Nutgrundfläche einer an einem der Bauteile vorgesehenen Nut abgleiten, wodurch die Ausrichtung des betreffenden Verbindungselements relativ zu dem jeweils anderen Verbindungselement innerhalb gewisser Grenzen bei der Verbindung der Verbindungselemente verändert werden kann, um Lagetoleranzen der Nuten, in denen die Verbindungselemente angeordnet sind, und/oder Herstellungstoleranzen der Verbindungselemente auszugleichen.

Durch diesen zusätzlichen Bewegungsfreiheitsgrad sind beim Zusammenbau der beiden Bauteile noch Korrekturen bezüglich der gegenseitigen Positionen möglich, was die Ansprüche an die Präzision bezüglich der Lage der Nuten in den Bauteilen deutlich reduziert und zu einer erheblichen Erleichterung für den Anwender führt.

Werden die Verbindungselemente durch das Bewegen des Halteelements in die Haltestellung gegeneinander verriegelt, so wird durch Zugkräfte, welche auf die Verbindungselemente in einer quer, vorzugsweise senkrecht, zu Anlegeflächen der Verbindungselemente gerichteten Verbindungsrichtung wirken, vorzugsweise so viel Reibung aktiviert, dass der genannte Bewegungsfreiheitsgrad aufgehoben wird und eine völlig feste Verbindung zwischen den zu verbindenden Bauteilen hergestellt wird.

Die Verbindungselemente des erfindungsgemäßen Verbindungsmittels werden in an den Bauteilen bereits vorhandene Nuten eingebracht, so dass kein hoher Kraftaufwand zum Einbringen der Verbindungselemente in die Bauteile erforderlich ist und daher keine Gefahr einer Beschädigung dieser Bauteile besteht.

Wenn das Halteelement des erfindungsgemäßen Verbindungsmittels von der Haltestellung in die Freigabestellung bewegt worden ist, können die Verbindungselemente vorzugsweise in einer senkrecht zu Anlegeflächen der Verbindungselemente, an denen die Verbindungselemente im verbundenen Zustand der Bauteile aneinander anliegen, gerichteten Verbindungsrichtung voneinander wegbewegt werden, ohne dass die Verbindungselemente zuvor in einer zu den Anlegeflächen parallelen Richtung relativ zueinander bewegt werden müssen.

Bei einer bevorzugten Ausgestaltung der Erfindung ist die im Wesentlichen ebene Anlegefläche des ersten Verbindungselements an eine ebenfalls im wesentlichen ebene Anlegefläche des zweiten Verbindungselements anlegbar.

Die im Wesentlichen ebene Anlegefläche des ersten Verbindungselements und/oder des zweiten Verbindungselements ist vorzugsweise im verbundenen Zustand der Bauteile im Wesentlichen parallel zu Kontaktflächen der Bauteile, an welchen die Bauteile aneinander anliegen, ausgerichtet.

Ferner sind im verbundenen Zustand der Bauteile die gekrümmte Anlagefläche und die im Wesentlichen ebene Anlegefläche des ersten Verbindungselements und/oder des zweiten Verbindungselements im Wesentlichen senkrecht zur Verbindungsrichtung ausgerichtet.

Die gekrümmte Anlagefläche mindestens eines Verbindungselements kann insbesondere im Wesentlichen kreiszylindermantelausschnittsförmig ausgebildet sein.

Bei einer bevorzugten Ausführungsform der Erfindung ist vorgesehen, dass mindestens ein Halteelement schwenkbar an dem ersten Verbindungselement gehalten ist.

Um die Verbindung der beiden Verbindungselemente in der Haltestellung des Halteelements zu bewirken, kann vorgesehen sein, dass mindestens ein Halteelement eine erste Haltekontur aufweist, welche in der Haltestellung eine an dem zweiten Verbindungselement vorgesehene zweite Haltekontur hintergreift.

Dabei können die erste Haltekontur und/oder die zweite Haltekontur bogenförmig ausgebildet sein.

Insbesondere kann vorgesehen sein, dass die erste Haltekontur und die zweite Haltekontur nicht konzentrisch zueinander ausgebildet sind, so dass die beiden Verbindungselemente beim Bewegen des Halteelements von der Freigabestellung in die Haltestellung gegeneinander gezogen werden.

Beispielsweise kann vorgesehen sein, dass mindestens ein Halteelement mittels eines von außerhalb des Verbindungselements mit dem Halteelement in Eingriff bringbaren mechanischen Betätigungsmittels von der Haltestellung in die Freigabestellung und/oder von der Freigabestellung in die Haltestellung bewegbar ist.

Hierfür ist es günstig, wenn mindestens ein Halteelement eine Aufnahme für einen Betätigungsabschnitt eines mechanischen Betätigungsmittels aufweist.

Insbesondere kann vorgesehen sein, dass mindestens ein Halteelement eine Aufnahme für einen Mehrkantschlüssel, einen Inbusschlüssel und/oder einen Schraubendreher aufweist.

Um eine Einwirkung des mechanischen Betätigungsmittels auf das Halteelement zu ermöglichen, kann vorgesehen sein, dass das erste Verbindungselement ein Gehäuse mit einer Durchtrittsöffnung für den Durchtritt eines mechanischen Betätigungsmittels zu einem Halteelement umfasst.

Insbesondere kann vorgesehen sein, dass das Gehäuse eine sich quer zur gekrümmten Anlagefläche des ersten Verbindungselements erstreckende Seitenwand aufweist und die Durchtrittsöffnung in der Seitenwand angeordnet ist. Alternativ hierzu kann auch vorgesehen sein, dass die Durchtrittsöffnung an der gekrümmten Anlagefläche des ersten Verbindungselements angeordnet ist.

Um mittels der Verbindung zwischen den Verbindungselementen auch Scherkräfte abtragen zu können, ist es von Vorteil, wenn mindestens eines der Verbindungselemente mindestens einen Einsteckvorsprung und das jeweils andere Verbindungselement mindestens eine den Einsteckvorsprung im verbundenen Zustand der Bauteile aufnehmende Aufnahmetasche umfasst. Hierdurch kann auf zusätzliche Dübel, wie sie bei den meisten anderen Verbindungsmitteln erforderlich sind, verzichtet werden.

Wenn mindestens eine Aufnahmetasche in einer Längsrichtung des Verbindungsmittels eine größere Ausdehnung aufweist als der darin aufgenommene Einsteckvorsprung, so bietet dies den Vorteil, dass sich das erste Verbindungselement und das zweite Verbindungselement in der Längsrichtung gegeneinander verschieben lassen, um auf diese Weise einen Toleranzausgleich der Verbindung zwischen den Bauteilen zu ermöglichen.

Um eine besonders wirksame Verankerung mindestens eines der Verbindungselemente in dem zugehörigen Bauteil zu erreichen, kann vorgesehen sein, dass mindestens eines der Verbindungselemente mit mindestens einem Haltevorsprung versehen ist, der eine gekrümmte Abstützfläche aufweist, welche in einem Längsschnitt kreisbogenförmig ist.

Mit dieser gekrümmten Abstützfläche kann sich der Haltevorsprung an einer ebenfalls gekrümmten Hinterschneidungsfläche eines Hinterschneidungsabschnitts einer Nut in dem zugehörigen Bauteil abstützen, wobei diese Hinterschneidungsfläche ebenfalls in einem Längsschnitt kreisbogenförmig ist und denselben Krümmungsradius aufweist wie die gekrümmte Abstützfläche des Haltevorsprungs. Durch den Eingriff zwischen dem Haltevorsprung und dem Hinterschneidungsabschnitt der Nut ergibt sich eine formschlüssige Verbindung zwischen dem Bauteil und dem Verbindungselement.

Der Haltevorsprung des erfindungsgemäßen Verbindungsmittels ist vorzugsweise nicht selbstschneidend ausgebildet.

Vielmehr ist der Haltevorsprung dafür vorgesehen, in eine bereits vor dem Einbringen des Verbindungselements in das Bauteil hergestellte Nut mit einem Hinterschneidungsabschnitt in dem betreffenden Bauteil in der Längsrichtung der Nut eingeschoben zu werden. In diesem Fall lässt sich der Haltevorsprung mit geringem Kraftaufwand in dem Hinterschneidungsabschnitt der Nut in Tangentialrichtung verschieben, so dass das Verbindungselement in dieser Richtung noch einen Bewegungsfreiheitsgrad besitzt und somit beim Verbinden der Bauteile noch Korrekturen bezüglich der gegenseitigen Positionen möglich sind.

Der Haltevorsprung kann insbesondere stumpfe Enden und/oder abgerundete Einlaufschrägen an seinen Endbereichen aufweisen.

Ein nicht-selbstschneidender Haltvorsprung kann eine beliebig große Querschnittsfläche aufweisen, um die mechanische Stabilität des Haltevorsprungs zu erhöhen.

Insbesondere kann die Querschnittsfläche des Haltevorsprungs mindestens 1 mm² betragen.

Der Haltevorsprung kann einen im Wesentlichen rechteckigen oder einen im Wesentlichen trapezförmigen Querschnitt aufweisen.

Alternativ oder ergänzend hierzu kann vorgesehen sein, dass mindestens ein Haltevorsprung sich mit wachsendem Abstand von einem Grundkörper des jeweiligen Verbindungselements verjüngt.

Andererseits kann vorgesehen sein, dass mindestens ein Haltevorsprung sich mit abnehmendem Abstand von einem Grundkörper des jeweiligen Verbindungselements verjüngt.

Alternativ oder ergänzend hierzu ist auch denkbar, dass mindestens ein Haltevorsprung einen Querschnitt mit einer zumindest abschnittsweise gekrümmten Außenkontur aufweist.

Bei einer bevorzugten Ausgestaltung der Erfindung ist vorgesehen, dass mindestens ein Haltevorsprung im Wesentlichen flächenbündig an die gekrümmte Anlagefläche des jeweiligen Verbindungselements angrenzt. In diesem Fall ist der Haltevorsprung also an dem dem Nutgrund zugewandten äußersten Rand des zugehörigen Verbindungselements angeordnet.

Alternativ oder ergänzend hierzu kann auch vorgesehen sein, dass mindestens ein Haltevorsprung gegenüber der gekrümmten Anlagefläche des jeweiligen Verbindungselements versetzt angeordnet ist. Der Haltevorsprung kann also insbesondere einen kleineren Krümmungsradius aufweisen als die gekrümmte Anlagefläche des jeweiligen Verbindungselements.

Ferner kann vorgesehen sein, dass an demselben Verbindungselement mehrere Haltevorsprünge angeordnet sind, welche unterschiedliche Krümmungsradien aufweisen. Insbesondere können mehrere Haltevorsprünge mit unterschiedlichen Krümmungsradien auf derselben Seite des jeweiligen Verbindungselements angeordnet sein.

Alternativ oder ergänzend zu einer Verankerung der Verbindungselemente mittels eines oder mehrerer Haltevorsprünge kann auch vorgesehen sein, dass mindestens eines der Verbindungselemente mit mindestens einem Verankerungselement zum Festlegen des betreffenden Verbindungselements an einem Nutgrund einer in einem der Bauteile vorgesehenen Nut versehen ist.

Ferner kann vorgesehen sein, dass mindestens eines der Verbindungselemente mit mindestens einer Verankerungsschraube zum Festlegen des betreffenden Verbindungselements an einem der Bauteile versehen ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung zweier miteinander zu verbindender Bauteile im unverbundenen Zustand, wobei jedes Bauteil jeweils eine Nut mit einem mittigen Basisabschnitt und zwei vom Basisabschnitt abstehenden bogenförmigen Hinterschneidungsabschnitten aufweist;
- Fig. 2: eine der Fig. 1 entsprechende schematische perspektivische Darstellung, in welche zusätzlich unsichtbare Kanten in gebrochenen Linien eingezeichnet sind;
- Fig. 3: einen schematischen Querschnitt durch das erste Bauteil aus den Fig. 1 und 2 im Bereich einer Zugangsbohrung;
- Fig. 4: eine schematische Seitenansicht des ersten Bauteils aus den Fig. 1 und 2;
- Fig. 5: eine schematische perspektivische Darstellung eines Verbindungsmittels zum Verbinden der beiden Bauteile aus den Fig. 1 bis 4, welches ein erstes Verbindungselement mit einem Halteelement und ein zweites Verbindungselement mit einer Aufnahme für das Halteelement umfasst;
- Fig. 6: eine der Fig. 5 entsprechende schematische perspektivische Darstellung, in welche zusätzlich unsichtbare Kanten in gebrochenen Linien eingezeichnet sind;
- Fig. 7: eine schematische Seitenansicht des Verbindungsmittels aus den Fig. 5 und 6 im unverbundenen Zustand;
- Fig. 8: eine schematische Seitenansicht des Verbindungsmittels aus den Fig. 5 und 6 im verbundenen Zustand;
- Fig. 9: eine weitere schematische Seitenansicht des Verbindungsmittels im unverbundenen Zustand;
- Fig. 10: einen schematischen Querschnitt durch das Verbindungsmittel im unverbundenen Zustand;
- Fig. 11: einen schematischen Querschnitt durch das Verbindungsmittel im verbundenen Zustand;
- Fig. 12: eine schematische perspektivische Darstellung der beiden miteinander zu verbindenden Bauteile im unverbundenen Zustand, wobei in die Nut jedes Bauteils jeweils eines der Verbindungselemente eingesetzt ist;
- Fig. 13: eine der Fig. 12 entsprechende schematische perspektivische Darstellung, in die zusätzlich unsichtbare Kanten in gebrochenen Linien eingezeichnet sind;
- Fig. 14: eine schematische Seitenansicht des ersten Bauteils, in dessen Nut das erste Verbindungselement eingesetzt wird;
- Fig. 15: eine schematische Seitenansicht beider Bauteile mit eingesetzten Verbindungselementen, die aufeinander zu bewegt werden;
- Fig. 16: eine schematische Seitenansicht der mit ihren Kontaktflächen aneinander anliegenden Bauteile und eines Mehrkantschlüssels, der durch eine Zugangsbohrung mit dem Halteelement des ersten Verbindungselements in Eingriff steht; und
- Fig. 17: eine schematische Seitenansicht der beiden Bauteile und des Mehrkantschlüssels, mittels welchem das Halteelement von einer Freigabestellung in eine Haltestellung bewegt wird.

Gleiche oder funktional äquivalente Elemente sind in allen Figuren mit denselben Bezugszeichen bezeichnet.

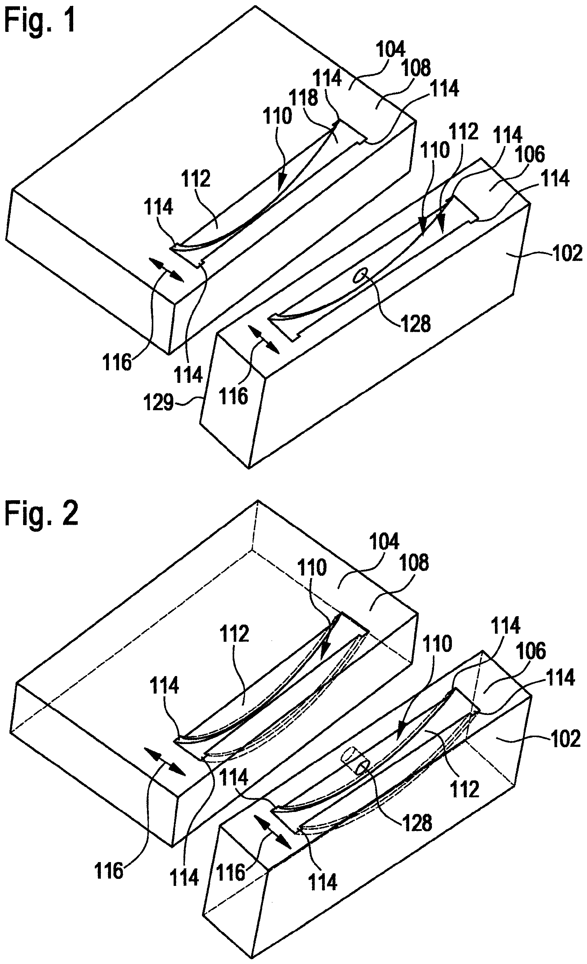

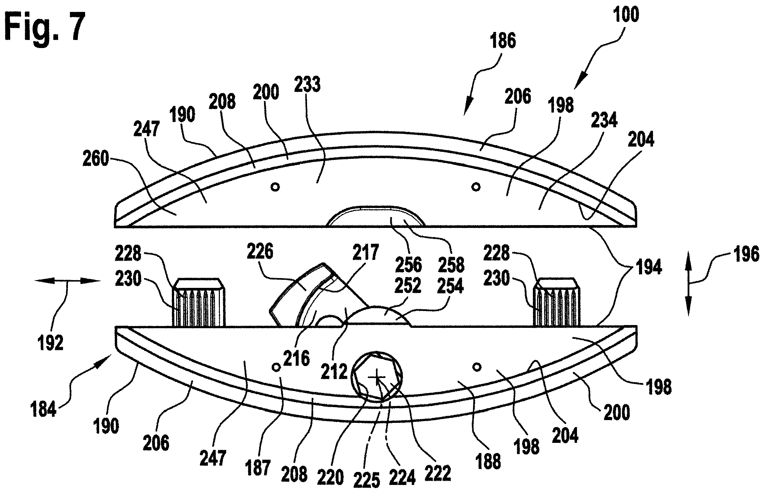

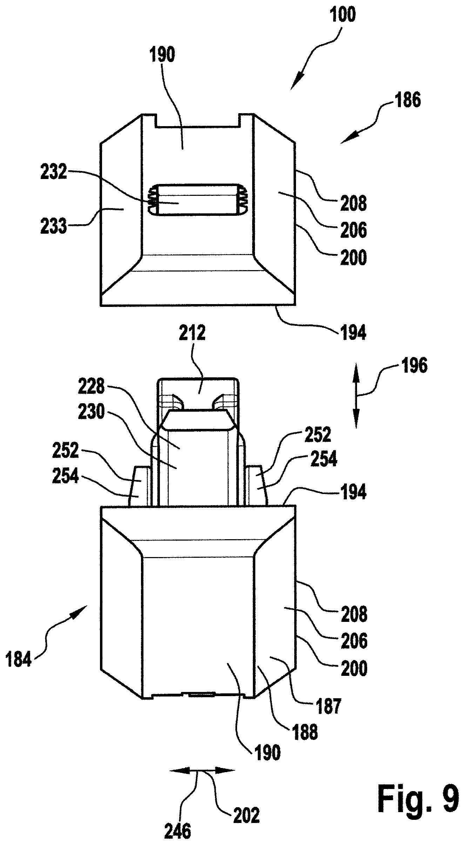

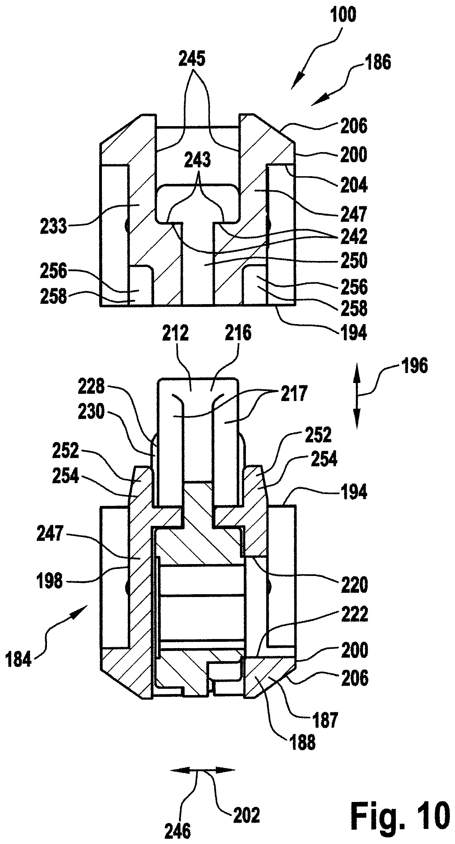

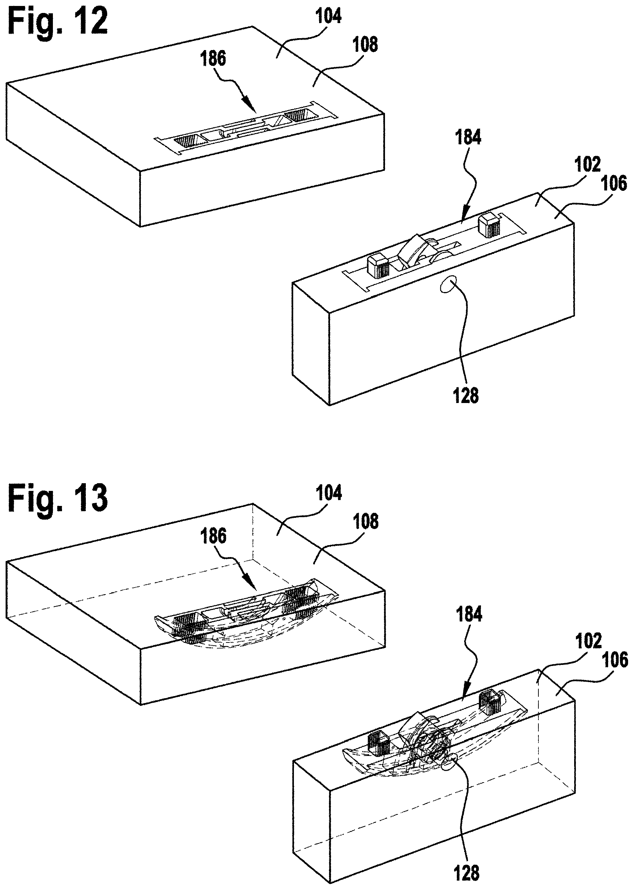

Eine in den Fig. 1 bis 17 dargestellte Ausführungsform eines als Ganzes mit 100 bezeichneten Verbindungsmittels wird im Folgenden am Beispiel einer Verbindung eines ersten, im Wesentlichen plattenförmigen Bauteils 102 mit einem zweiten, ebenfalls im Wesentlichen plattenförmigen Bauteil 104 erläutert (siehe Fig. 1 bis 4).

Die beiden Bauteile 102 und 104 bestehen beispielsweise aus Holz oder Sperrholz, können aber auch aus beliebigen anderen Materialien, beispielsweise aus einem metallischen Material oder einem Kunststoffmaterial (beispielsweise Plexiglas), bestehen. Ferner kann vorgesehen sein, dass das erste Bauteil 102 und das zweite Bauteil 104 aus voneinander verschiedenen Materialien bestehen.

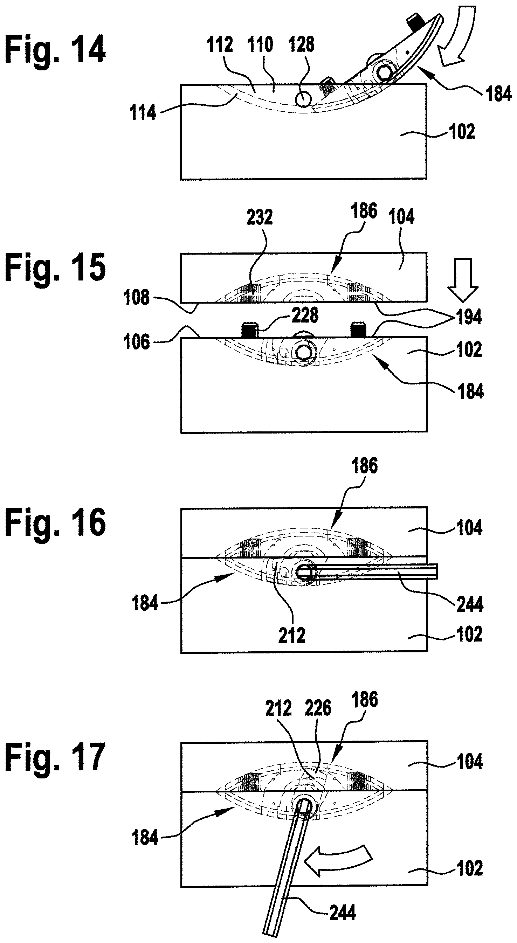

In dem in Fig. 17 dargestellten verbundenen Zustand der beiden Bauteile 102 und 104 liegt eine eine Schmalseite des ersten Bauteils 102 bildende Kontaktfläche 106 an einer eine Hauptfläche des plattenförmigen zweiten Bauteils 104 bildenden Kontaktfläche 108 des zweiten Bauteils 104 an.

Auf jede der Kontaktflächen 106, 108 mündet jeweils eine in dem betreffenden Bauteil 102 bzw. 104 ausgebildete Nut 110, welche einen kreiszylindersegment- oder kreiszylinderabschnittsförmigen Basisabschnitt 112 und zwei sich in einer Dickenrichtung oder Querrichtung 116 von dem Basisabschnitt 112 weg erstreckende Hinterschneidungsabschnitte 114 umfasst.

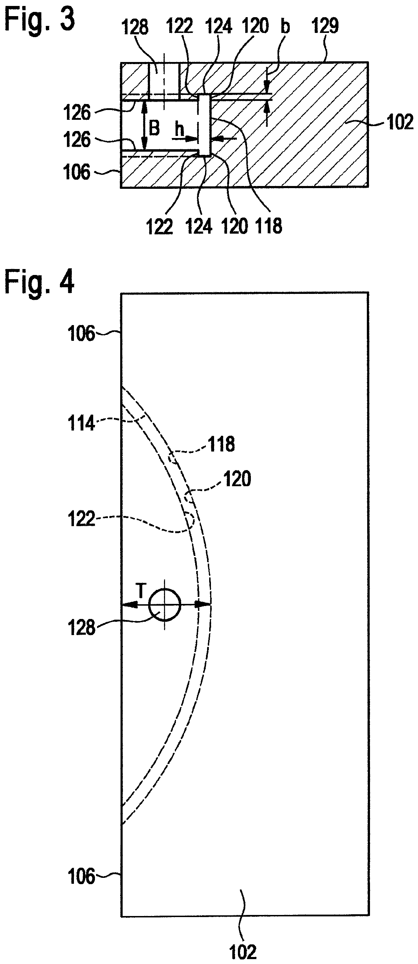

Der Krümmungsradius des Basisabschnitts 112 ist größer als die Nuttiefe T (siehe Fig. 4), so dass die gewölbte Nutgrundfläche 118 die jeweilige Kontaktfläche 106, 108 unter einem spitzen Winkel schneidet.

Der Basisabschnitt 112 der Nut 110 weist in der Dickenrichtung 116 eine Breite B von beispielsweise ungefähr 8 mm auf.

Jeder der Hinterschneidungsabschnitte 114 der Nut 110 wird auf seiner der jeweiligen Kontaktfläche 106 bzw. 108 abgewandten Seite durch eine mit der Nutgrundfläche 118 flächenbündige Grundfläche 120 begrenzt, welche kreiszylindermantelausschnittsförmig ausgebildet ist und denselben Krümmungsradius wie die Nutgrundfläche 118 des Basisabschnitts 112 aufweist.

In der Richtung auf die Kontaktfläche 106 bzw. 108 hin wird jeder Hinterschneidungsabschnitt 114 durch eine ebenfalls kreiszylindermantelausschnittsförmige Hinterschneidungsfläche 122 begrenzt, welche konzentrisch zu der Grundfläche 120 ausgebildet ist und einen kleineren Krümmungsradius aufweist.

Seitlich wird jeder der Hinterschneidungsabschnitte 114 durch eine senkrecht zur jeweiligen Kontaktfläche 106 bzw. 108 verlaufende seitliche Begrenzungsfläche 124 begrenzt.

Die Breite b, d.h. die Erstreckung in der Dickenrichtung/Querrichtung 116, beträgt für jeden der Hinterschneidungsabschnitte 114 beispielsweise ungefähr 1 mm.

Die Höhe h, d.h. der Abstand zwischen der Grundfläche 120 und der Hinterschneidungsfläche 122, beträgt für jeden der Hinterschneidungsabschnitte 114 beispielsweise ungefähr 2 mm.

Der Basisabschnitt 112 jeder Nut 110 wird durch im Wesentlichen senkrecht zu der jeweiligen Kontaktfläche 106 bzw. 108 verlaufende seitliche Begrenzungswände 126 begrenzt, welche voneinander den Abstand der Nutbreite B aufweisen.

Wie beispielsweise aus Fig. 3 zu ersehen ist, mündet in die Nut 110 des ersten Bauteils 102 eine senkrecht zu einer der seitlichen Begrenzungswände 126 verlaufende, im Wesentlichen zylindrische Zugangsbohrung 128, deren anderes Ende an einer Hauptfläche 129 des plattenförmigen ersten Bauteils 102 mündet und so einen Zugang vom Außenraum des ersten Bauteils 102 zu dem Basisabschnitt 112 der Nut 110 ermöglicht.

Um die vorstehend beschriebenen Nuten 110 an den Bauteilen 102 und 104 auszubilden, kann beispielsweise die in der EP 1 990 549 A1 beschriebene Nutfräsvorrichtung verwendet werden.

Nach der Herstellung der Nuten 110 an dem ersten Bauteil 102 und dem zweiten Bauteil 104 wird an dem ersten Bauteil 102 noch die eine Hauptfläche 129 mit dem Basisabschnitt 112 der Nut 110 verbindende Zugangsbohrung 128 hergestellt.

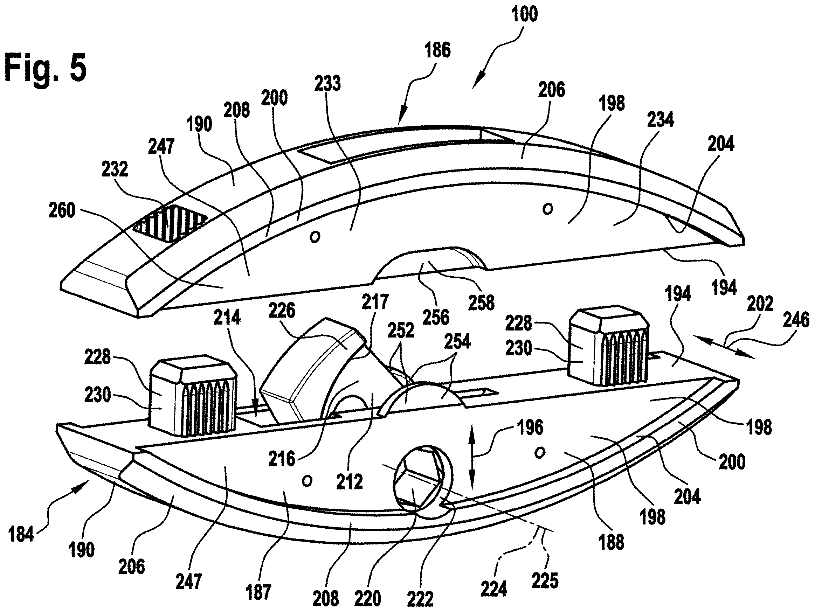

Das die beiden Bauteile 102 und 104 miteinander verbindende Verbindungsmittel 100 umfasst ein erstes Verbindungselement 184 zum Einsetzen in die Nut des ersten Bauteils 102 und ein zweites Verbindungselement 186 zum Einsetzen in die Nut 110 des zweiten Bauteils 104, wie sie in den Fig. 5 bis 11 dargestellt sind.

Das erste Verbindungselement 184 umfasst einen Grundkörper 187. Der Grundkörper 187 umfasst ein im Wesentlichen kreiszylinderabschnittsförmiges Gehäuse 188 mit einer bogenförmig gekrümmten Anlagefläche 190, die in einem in der Längsrichtung 192 des Verbindungselements 184 genommenen Längsschnitt kreisbogenförmig ist, und eine der gekrümmten Anlagefläche 190 gegenüberliegende ebene Anlegefläche 194 sowie zwei seitliche, im Wesentlichen parallel zu einer Verbindungsrichtung 196 verlaufende Seitenflächen 198.

Vom unteren Rand der Seitenflächen 198 steht jeweils ein bogenförmig gekrümmter Haltevorsprung 200 in einer zur Längsrichtung 192 und zur Verbindungsrichtung 196 senkrechten Querrichtung oder Dickenrichtung 202 vor.

Jeder Haltevorsprung 200 ist in Richtung zu der Anlegefläche 194 hin durch eine bogenförmig gekrümmte Abstützfläche 204 begrenzt, die in einem längs der Längsrichtung 192 genommenen Längsschnitt kreisbogenförmig ist.

Auf der der Anlegefläche 194 abgewandten Seite ist jeder Haltevorsprung 200 durch eine ebenfalls bogenförmig gekrümmte Anlagefläche begrenzt, welche in einem längs der Längsrichtung 192 genommenen Längsschnitt kreisbogenförmig ist und sich flächenbündig an die Anlagefläche 190 des Gehäuses 188 anschließt.

Die Abstützfläche 204 und die Anlagefläche 206 jedes Haltevorsprungs 200 sind durch eine im Wesentlichen parallel zur Längsrichtung 192 und parallel zur Verbindungsrichtung 196 verlaufende Seitenfläche 208 miteinander verbunden.

Das Profil jedes Haltevorsprungs 200 entspricht im Wesentlichen dem Profil des jeweils zugeordneten Hinterschneidungsabschnitts 114 der Nut 110, und die Krümmung des Haltevorsprungs 200 entspricht der Krümmung des zugeordneten Hinterschneidungsabschnitts 114, so dass das erste Verbindungselement 184 mit seinen Haltevorsprüngen 200 in die Hinterschneidungsabschnitte 114 der Nut 110 einführbar und darin gleitend verschiebbar ist.

Das erste Verbindungselement 184 umfasst ferner eine von dem Gehäuse 188 umgebene Aufnahmekammer 210 zur Aufnahme eines Halteelements 212, das durch eine Mündungsöffnung 214, an welcher die Aufnahmekammer 210 in die Anlegefläche 194 des ersten Verbindungselements 184 mündet, aus der Aufnahmekammer 210 heraustreten kann.

Die Aufnahmekammer 210 kann sich auf ihrer der Anlegefläche 194 abgewandten Seite bis in die gekrümmte Anlagefläche 190 hinein erstrecken.

Das Halteelement 212 umfasst einen plattenförmigen Grundkörper oder Zentralabschnitt 216, der an einem Ende mit ringförmigen Erhebungen 218 versehen ist.

Die ringförmigen Erhebungen 218 umgeben eine Aufnahmeöffnung 220 mit polygonalem Querschnitt, die mit einer im Wesentlichen kreisrunden Durchtrittsöffnung 222 in einer der Seitenflächen 198 des Gehäuses 188 fluchtet.

Die ringförmigen Erhebungen 218 stützen sich an in der Aufnahmekammer 210 angeordneten Wiederlagern 219 ab, so dass das Halteelement 212 um eine Mittelachse 224 der Aufnahmeöffnung 220 drehbar an dem Gehäuse 188 gehalten ist.

Die Mittelachse 224 ist somit eine Rotationsachse 225 des Halteelements 212.

Das den ringförmigen Erhebungen 218 abgewandte freie Ende des Halteelements 212 ist mit bogenförmigen Vorsprüngen 226 versehen, welche in der Dickenrichtung/Querrichtung 202 zu beiden Seiten des Grundkörpers 216 von demselben abstehen.

Mittels der Vorsprünge 226 sind zwei erste Haltekonturen 217 des Halteelements 212 gebildet, welche auf einander angewandten Seiten des Zentralabschnitts 216 des Halteelements 212 angeordnet sind.

Ferner umfasst das erste Verbindungselement 184 bezüglich der Längsrichtung 192 zu beiden Seiten der Mündungsöffnung 214 der Aufnahmekammer 210 jeweils einen Einsteckvorsprung 228 in Form eines im Wesentlichen quaderförmigen Dübels 230, der sich ausgehend von der Anlegefläche 194 längs der Verbindungsrichtung 196 erstreckt und sich zu seinem der Anlegefläche 194 abgewandten Ende hin verjüngt, um das Einführen in jeweils eine zu dem Dübel 230 komplementäre Aufnahmetasche 232 des zweiten Verbindungselement 186 zu erleichtern.

Dabei passen die Einsteckvorsprünge 228 des ersten Verbindungselements 184 in der Querrichtung/Dickenrichtung 202 sehr genau in die Aufnahmetaschen 232 des zweiten Verbindungselements 186, so dass die Einsteckvorsprünge 228 in der Dickenrichtung 202 die Scherkräfte der Verbindung zwischen den Bauteilen 102 und 104 aufnehmen können und auf zusätzliche Dübel, wie es bei den meisten anderen Verbindungsmitteln erforderlich ist, verzichtet werden kann.

In der Längsrichtung 192 hingegen weisen die Aufnahmetaschen 232 eine größere Ausdehnung auf als die Einsteckvorsprünge 228, so dass sich das erste Verbindungselement 184 und das zweite Verbindungselement 186 in der Längsrichtung 192 gegeneinander verschieben lassen, um auf diese Weise einen Toleranzausgleich der Verbindung zwischen den Bauteilen 102 und 104 zu ermöglichen.

Es kann jedoch auch vorgesehen sein, dass die Einsteckvorsprünge 228 und die Aufnahmetaschen 232 mit ineinandergreifenden Vertiefungen und Vorsprüngen, insbesondere Rillen, versehen sind, um die Verbindungselemente 184, 186 und somit auch die Bauteile 102, 104 bereits dann relativ zueinander festzulegen, wenn diese aufeinandergesteckt werden.

Das zweite Verbindungselement 186 umfasst einen Grundkörper 233. Der Grundkörper 233 umfasst ein im Wesentlichen kreiszylinderabschnittsförmiges Gehäuse 234 mit einer bogenförmig gekrümmten Anlagefläche 190, die in einem längs der Längsrichtung 192 des Verbindungselements 186 genommenen Längsschnitt kreisbogenförmig ist, eine der gekrümmten Anlagefläche 190 gegenüberliegende ebene Anlegefläche 194, Seitenflächen 198 und von den Seitenflächen 198 in der Querrichtung 202 vorspringende Haltevorsprünge 200 mit einer zu der Anlegefläche 194 hin gerichteten gekrümmten Abstützfläche 204, einer mit der Anlagefläche 190 bündigen gekrümmten Anlagefläche 206 und einer Seitenfläche 208.

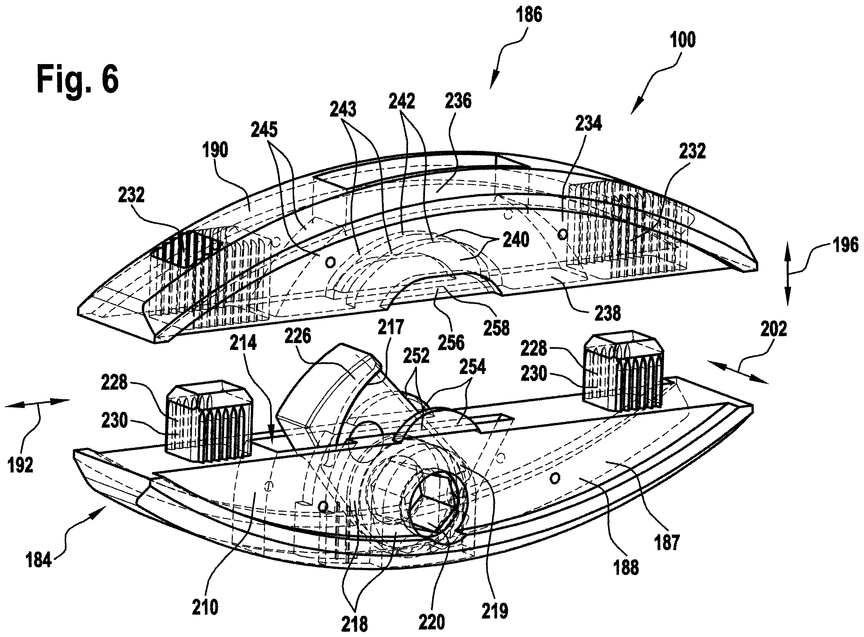

Wie am besten aus Fig. 6 zu ersehen ist, weist das Gehäuse 134 des zweiten Verbindungselements 186 neben den Aufnahmetaschen 232 für die Einsteckvorsprünge 228 des ersten Verbindungselements 184 ferner eine mittig zwischen den Aufnahmetaschen 232 angeordnete Einlaufkammer 236 auf, welche an einer Mündungsöffnung 238 in der Anlegefläche 194 mündet und sich auf der gegenüberliegenden Seite bis in die Anlagefläche 190 hinein erstrecken kann.

Von beiden Seiten der Mündungsöffnung 238 aus springt jeweils ein kreiszylinderabschnittsförmiger Rückhaltevorsprung 240 mit einer bogenförmig gekrümmten Rückhaltefläche 242 in der Dickenrichtung/Querrichtung 202 in das Innere der Einlaufkammer 236 vor, so dass zwischen den beiden Rückhaltevorsprüngen 240 ein Spalt verbleibt, dessen Breite geringfügig größer ist als die Dicke des Grundkörpers 216 des Halteelements 212 des ersten Verbindungselements 184.

Das zweite Verbindungselement 186 umfasst somit zwei zweite Haltekonturen 243, welche an einander zugewandten Innenseiten 245 von Seitenwandungen 247 des Grundkörpers 233 angeordnet und/oder ausgebildet sind.

Zur Herstellung der lösbaren Verbindung zwischen dem ersten Bauteil 102 und dem zweiten Bauteil 104 mittels des Verbindungsmittels 100 aus dem ersten Verbindungselement 184 und dem zweiten Verbindungselement 186 wird wie folgt vorgegangen:
Zunächst wird das erste Verbindungselement 184, wie in Fig. 14 dargestellt, so in die Nut 110 des ersten Bauteils 102 eingeschoben, dass die Haltevorsprünge 200 des ersten Verbindungselements 184 in die Hinterschneidungsabschnitte 114 der Nut 110 eingreifen und die Durchtrittsöffnung 222 in der Seitenfläche 198 des Gehäuses 188 mit der Zugangsbohrung 128 in dem ersten Bauteil 102 fluchtet (siehe Fig. 15).

Ebenso wird das zweite Verbindungselement 186 so in die Nut 110 an dem zweiten Bauteil 104 eingeschoben, dass dessen Haltevorsprünge 200 in die Hinterschneidungsabschnitte 114 der Nut 110 eingreifen und das Gehäuse 234 des zweiten Verbindungselements 186 im Wesentlichen vollständig in der Nut 110 aufgenommen ist (siehe Fig. 15).

Das Halteelement 212 des ersten Verbindungselements 184 ist zunächst vollständig in die Aufnahmekammer 210 des ersten Verbindungselements 184 eingeschwenkt (siehe Fig. 15).

In dieser Freigabestellung des Halteelements 212 können die beiden Bauteile 102 und 104 gegeneinander bewegt werden, bis deren Kontaktflächen 106 und 108 sowie die Anlegeflächen 194 der Verbindungselemente 184 und 186 flächig aneinander anliegen und die Einsteckvorsprünge 228 des ersten Verbindungselements 184 in die Aufnahmetaschen 232 des zweiten Verbindungselements 186 eingreifen (siehe Fig. 16).

Nun wird das Betätigungsende eines gewinkelten Mehrkantschlüssels 244 durch die Zugangsbohrung 128 in dem ersten Bauteil 102 und die Durchtrittsöffnung 222 im Gehäuse 188 des ersten Verbindungselements 184 in die Aufnahmeöffnung 220 des Halteelements 212 eingeführt und mit der letzteren in Eingriff gebracht (siehe Fig. 16).

Anschließend wird das Halteelement 212 mittels des Mehrkantschlüssels 244 aus der Aufnahmekammer 210 des ersten Verbindungselements 184 herausgeschwenkt, so dass die bogenförmigen Vorsprünge 226 des Halteelements 212 durch die Mündungsöffnung 238 in die Einlaufkammer 236 des zweiten Verbindungselements 186 gelangen und dabei die Rückhaltevorsprünge 240 hintergreifen (siehe Fig. 17).

Die ersten Haltekonturen 217 des ersten Verbindungselements 184 hintergreifen somit die zweiten Haltekonturen 243 des zweiten Verbindungselements 186.

Die Krümmung der bogenförmigen Vorsprünge 226 des Halteelements 212 einerseits und die Krümmung der Rückhalteflächen 242 der Rückhaltevorsprünge 240 sind dabei so aufeinander abgestimmt, dass die beiden Verbindungselemente 184 und 186 beim Einschwenken des Halteelements 212 in die Einlaufkammer 236 zunehmend längs der Verbindungsrichtung 196 gegeneinander gezogen werden und sich eine möglichst große Kontaktfläche zwischen den Rückhalteflächen 242 und den bogenförmigen Vorsprüngen 226 des Halteelements 212 ergibt.

Dadurch werden Druckspannungsspitzen an den Kontaktflächen zwischen den Rückhaltevorsprüngen 240 und den bogenförmigen Vorsprüngen 226 des Halteelements 212 vermieden, und die Festigkeit des Materials, aus dem das Halteelement 212 und das Gehäuse 234 des zweiten Verbindungselements 186 gefertigt sind, wird möglichst gleichmäßig ausgenutzt.

Das Halteelement 212 und die Grundkörper 187, 233, insbesondere die Gehäuse 188 und 234, der Verbindungselemente 184 bzw. 186 können daher insbesondere aus einem Spritzkunststoff hergestellt sein.

Das Halteelement 212 erfährt bei der Belastung der Verbindung zwischen den Verbindungselementen 184 und 186 längs der Verbindungsrichtung 196 im Wesentlichen nur Zug- und Druckkräfte, aber nur vernachlässigbar kleine Biegemomente.

Die Aufnahmekammer 210 des ersten Verbindungselements 184, die Einlaufkammer 236 des zweiten Verbindungselements 186 und die Außenkonturen der Verbindungselemente 184 und 186 sind so geformt, dass sie einstückig hergestellt werden können.

Das Halteelement 212 kann durch die Mündungsöffnung der Aufnahmekammer 210 an der Anlagefläche 190 des ersten Verbindungselements 184 in die Aufnahmekammer 210 eingeschoben werden, so dass das Gehäuse 188 des ersten Verbindungselements 184 nicht teilbar sein muss.

Es kann daher auf eine Halbschalenbauweise des Gehäuses 188 des ersten Verbindungselements 184 verzichtet werden, was die Festigkeit des ersten Verbindungselements 184 erhöht.

Da die gekrümmten Anlageflächen 190 der Verbindungselemente 184 und 186 denselben Krümmungsradius aufweisen wie die Nutgrundflächen 118 der Nuten 110, an denen die Anlageflächen 190 flächig anliegen und abgleiten können, und da sich die kreisbogenförmigen Haltevorsprünge 200 der Verbindungselemente 184 und 186 mit geringem Kraftaufwand in den jeweils zugeordneten Hinterschneidungsabschnitten 114 der Nuten 110 tangential verschieben lassen und daher die Verbindungselemente 184 und 186 beim Herstellen der Verbindung noch einen Bewegungsfreiheitsgrad besitzen, sind beim Verbinden der Bauteile 102 und 104 noch Korrekturen bezüglich der gegenseitigen Position der Verbindungselemente 184 und 186 möglich.

Dies reduziert die Ansprüche an die Präzision bezüglich der Lage der Nuten 110 an den Bauteilen 102 und 104 deutlich und führt zu einer erheblichen Erleichterung für den Anwender.

Ist das Halteelement 212 aus der in Fig. 16 dargestellten Freigabestellung in die in Fig. 17 dargestellte Haltestellung gebracht, wird durch Zugkräfte, welche auf die Verbindungselemente 184 und 186 in der Verbindungsrichtung 196 wirken, zwischen den Abstützflächen 204 der Haltevorsprünge 200 einerseits und den damit in Kontakt stehenden Hinterschneidungsflächen 122 der Hinterschneidungsabschnitte 114 der Nuten 110 andererseits eine so große Haftreibungskraft erzeugt, dass der vorstehend beschriebene restliche Bewegungsfreiheitsgrad aufgehoben wird und eine völlig feste Verbindung zwischen den Bauteilen 102 und 104 hergestellt wird.

Durch die Abstützung der Haltevorsprünge 200 an den Hinterschneidungsflächen 122 der Hinterschneidungsabschnitte 114 der Nuten 110 in den Bauteilen 102 und 104 sind die Verbindungselemente 184 und 186 somit sicher in dem jeweils zugeordneten Bauteil 102 bzw. 104 verankert.

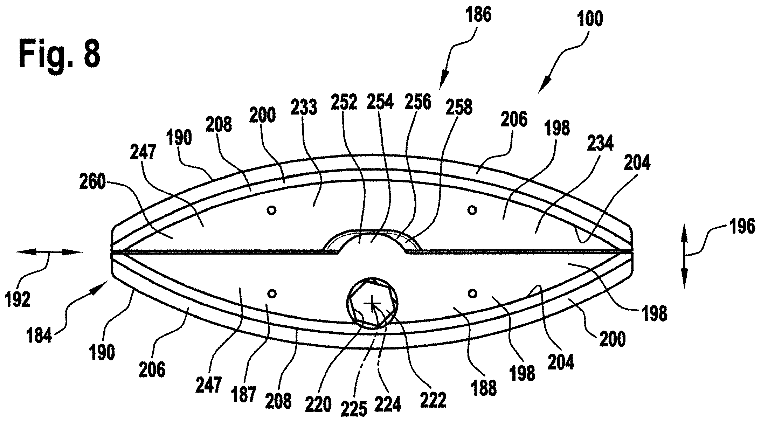

In der in Fig. 8 dargestellten Haltestellung verhindert das Halteelement 212 im Zusammenwirken mit den Rückhaltevorsprüngen 240 eine Relativbewegung des ersten Verbindungselements 184 und des zweiten Verbindungselements 186 längs der Verbindungsrichtung 196.

Um das erste Bauteil 102 und das zweite Bauteil 104 wieder voneinander zu lösen, ist es lediglich erforderlich, wiederum einen Mehrkantschlüssel 244 durch die Zugangsbohrung 128 in dem ersten Bauteil 102 hindurch mit der Aufnahmeöffnung 220 des Halteelements 212 in Eingriff zu bringen und das Halteelement 212 durch Verschwenken in entgegengesetzter Richtung von der Haltestellung in die in Fig. 16 dargestellte Freigabestellung zu bewegen, in welcher die bogenförmigen Vorsprünge 226 des Halteelements 212 die Rückhaltevorsprünge 240 des zweiten Verbindungselements 186 nicht mehr hintergreifen, so dass die Verbindungselemente 184 und 186 ohne weiteres längs der Verbindungsrichtung 196 auseinander bewegt werden können.

Alternativ zur Rechteckform der Haltevorsprünge 200 kann vorgesehen sein, dass die Haltevorsprünge 200 ein trapezförmiges Profil aufweisen, welches sich mit wachsendem Abstand von den Seitenflächen 198 des jeweiligen Gehäuses 188 bzw. 234 verjüngt.

Ferner kann vorgesehen sein, dass sich das Profil der Haltevorsprünge 200 mit abnehmendem Abstand von der jeweils zugeordneten Seitenfläche 198 verjüngt.

Auch kann vorgesehen sein, dass das Profil der Haltevorsprünge 200 eine zumindest abschnittsweise gekrümmte Außenkontur, beispielsweise eine halbkreisförmige Außenkontur, aufweist.

Wie insbesondere den Fig. 6, 10 und 11 zu entnehmen ist, ist das Halteelement 212 zur Verbindung der Verbindungselemente 184, 186 in einen Zwischenraum 250 zwischen den Seitenwandungen 247 des Grundkörpers 233 des zweiten Verbindungselements 186 einbringbar.

Die ersten Haltekonturen 217 des Halteelements 212 wirken dabei zumindest näherungsweise in der Verbindungsrichtung 196 auf die zweiten Haltekonturen 243, welche in die Seitenwandungen 247 des Grundkörpers 233 des zweiten Verbindungselements 186 eingeformt sind.

In zumindest geringem Maße wird hierbei auch eine in der Querrichtung 202 wirkende Kraft von dem Halteelement 212 auf die zweiten Haltekonturen 243 ausgeübt.

Dies kann dazu führen, dass die zweiten Haltekonturen 243 und somit auch die Seitenwandungen 247 auseinandergedrückt, d.h. voneinander entfernt, werden.

Hierdurch kann die Stabilität der Verbindung zwischen den Verbindungselementen 184, 186 beeinträchtigt werden.

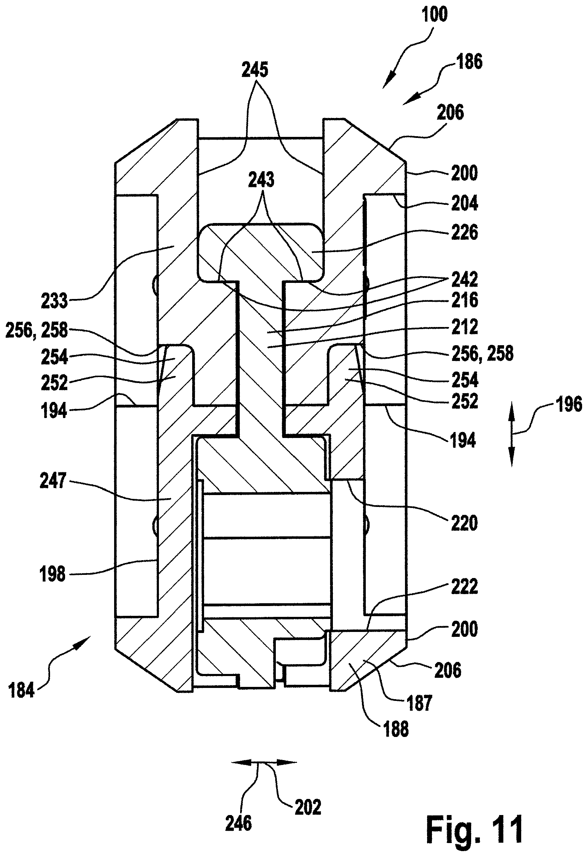

Wie insbesondere den Fig. 5 und 11 zu entnehmen ist, umfasst das Verbindungsmittel 100 zwei Abstützelemente 252, mittels welchen die zweiten Haltekonturen 243 in einer parallel zur Querrichtung 202 verlaufenden Abstützrichtung 246 abgestützt werden können.

Die Abstützelemente 252 sind dabei insbesondere als Abstützvorsprünge 254 ausgebildet.

Die Abstützvorsprünge 254 sind einstückig mit dem Grundkörper 187 des ersten Verbindungselements 184 ausgebildet.

Insbesondere sind die Abstützvorsprünge 254 sich an die Seitenwandungen 247 des Grundkörpers 187 des ersten Verbindungselements 184 anschließende Fortsätze, welche in der Verbindungsrichtung 196 (Vorsprungsrichtung) über die Anlegefläche 194 hinausragen.

Die Abstützvorsprünge 254 sind zu beiden Seiten des Halteelements 212 angeordnet.

Das zweite Verbindungselement 186 umfasst zwei Abstützausnehmungen 256 oder Abstützelementaufnahmen 258, welche mit den Abstützelementen 252 zusammenwirken.

Insbesondere sind die Abstützausnehmungen 256 bzw. die Abstützelementaufnahmen 258 im Wesentlichen komplementär zu den Abstützelementen 252 geformt, so dass die Abstützelemente 252 von dem zweiten Verbindungselement 186 aufgenommen oder an das zweite Verbindungselement 186 angelegt werden können.

Die Abstützausnehmungen 256 bzw. die Abstützelementaufnahmen 258 sind insbesondere in die Seitenwandungen 247 des Grundkörpers 233 des zweiten Verbindungselements 186 eingeformt.

Die Abstützausnehmungen 256 bzw. die Abstützelementaufnahmen 258 sind dabei auf den Innenseiten 245 abgewandten Außenseiten 260 der Seitenwandungen 247 angeordnet.

Wie insbesondere Fig. 11 zu entnehmen ist, umgreifen die Abstützelemente 252 im verbundenen Zustand der Bauteile 102, 104 den Grundkörper 233 des zweiten Verbindungselements 186 in der Querrichtung 202 des Verbindungsmittels 100.

Mittels der Abstützelemente 252 kann somit insbesondere eine von dem Halteelement 212 auf die zweiten Haltekonturen 243 in der Querrichtung 202 wirkende Kraft aufgenommen werden.

Die zweiten Haltekonturen 243 werden somit mittels der Abstützelemente 252 im verbundenen Zustand der Bauteile 102, 104 wirksam in der Abstützrichtung 246 abgestützt.

Wie insbesondere den Fig. 5 und 6 zu entnehmen ist, weisen die Abstützausnehmungen 256 bzw. Abstützelementaufnahmen 258 in der Längsrichtung 192 des Verbindungsmittels 100 eine größere Ausdehnung auf als die Abstützelemente 252. Hierdurch können die Verbindungselemente 184, 186 in der Längsrichtung 192 variabel relativ zueinander positioniert werden, bevor die Verbindungselemente 184, 186 durch Verschwenken des Halteelements 212 in die Haltestellung fest miteinander verbunden werden.

Aufgrund der Abstützelemente 252 zum Abstützen der zweiten Haltekonturen 243 ist mittels des Verbindungsmittels 100 eine besonders stabile und zuverlässige Verbindung zwischen zwei Bauteilen 102, 104 herstellbar.

## Patentansprüche

1. Verbindungsmittel (100) zum Verbinden eines ersten Bauteils (102) und eines zweiten Bauteils (104), insbesondere zum Verbinden von Möbel- oder Maschinenteilen, umfassend
ein im verbundenen Zustand der Bauteile (102, 104) an dem ersten Bauteil (102) angeordnetes erstes Verbindungselement (184) und
ein im verbundenen Zustand der Bauteile (102, 104) an dem zweiten Bauteil (104) angeordnetes zweites Verbindungselement (186),
wobei das erste Verbindungselement (184) einen Grundkörper (187) und ein relativ zu dem Grundkörper (187) des ersten Verbindungselements (184) bewegliches Halteelement (212) zum lösbaren Verbinden des ersten Verbindungselements (184) mit dem zweiten Verbindungselement (186) umfasst,
wobei das bewegliche Halteelement (212) eine erste Haltekontur (217) umfasst,
wobei das zweite Verbindungselement (186) eine zweite Haltekontur (243) umfasst, welche mit der ersten Haltekontur (217) hintergreifbar ist,
**dadurch gekennzeichnet,**
**dass** das Verbindungsmittel (100) mindestens ein Abstützelement (252) zum Abstützen der zweiten Haltekontur (243) im verbundenen Zustand der Bauteile (102, 104) umfasst, wobei das mindestens eine Abstützelement (252) im verbundenen Zustand der Bauteile (102, 104) auf einer dem Halteelement (212) abgewandten Außenseite (260) einer Seitenwandung (247) des Grundkörpers (187) des zweiten Verbindungselements (186) angeordnet ist, wobei in der Seitenwandung (247) die zweite Haltekontur (243) angeordnet ist.

2. Verbindungsmittel (100) nach Anspruch 1, **dadurch gekennzeichnet, dass** das erste Verbindungselement (184) und/oder das zweite Verbindungselement (186) mindestens ein Abstützelement (252) zum Abstützen der zweiten Haltekontur (243) im verbundenen Zustand der Bauteile (102, 104) umfasst.

3. Verbindungsmittel (100) nach einem der Ansprüche 1 oder 2, **dadurch gekennzeichnet, dass** mindestens ein Abstützelement (252) als ein Abstützvorsprung (254) eines Grundkörpers (187) des ersten Verbindungselements (184) und/oder als ein Abstützvorsprung (254) eines Grundkörpers (233) des zweiten Verbindungselements (186) ausgebildet ist.

4. Verbindungsmittel (100) nach Anspruch 3, **dadurch gekennzeichnet, dass** mindestens ein Abstützvorsprung (254) sich ausgehend von dem Grundkörper (187, 233) in mindestens einer senkrecht zu einer Vorsprungsrichtung (196) ausgerichteten Richtung (116, 192, 202) verjüngt.

5. Verbindungsmittel (100) nach einem der Ansprüche 1 bis 4, **dadurch gekennzeichnet, dass** die zweite Haltekontur (243) mittels des mindestens einen Abstützelements (252) in einer Querrichtung (202) des Verbindungsmittels (100) abstützbar ist.

6. Verbindungsmittel (100) nach einem der Ansprüche 1 bis 5, **dadurch gekennzeichnet, dass** die zweite Haltekontur (243) mittels des mindestens einen Abstützelements (252) in einer Abstützrichtung (246) abstützbar ist, welche im Wesentlichen parallel zu einer Rotationsachse (225) des Halteelements (212) ausgerichtet ist.

7. Verbindungsmittel (100) nach einem der Ansprüche 1 bis 6, **dadurch gekennzeichnet, dass** das mindestens eine Abstützelement (252) als mindestens ein Abstützvorsprung ausgebildet ist, wobei der mindestens eine Abstützvorsprung (254) im verbundenen Zustand der Bauteile (102, 104) auf einer dem Halteelement (212) abgewandten Seite (260) der zweiten Haltekontur (243) angeordnet ist.

8. Verbindungsmittel (100) nach einem der Ansprüche 1 bis 7, **dadurch gekennzeichnet, dass** mindestens ein Abstützelement (252) sich im verbundenen Zustand der Bauteile (102, 104) in mindestens eine Abstützausnehmung (256) und/oder in mindestens eine Abstützelementaufnahme (258) erstreckt.

9. Verbindungsmittel (100) nach Anspruch 8, **dadurch gekennzeichnet, dass** die mindestens eine Abstützausnehmung (256) und/oder die mindestens eine Abstützelementaufnahme (258) eine in einer Längsrichtung (192) der Verbindungselemente (184, 186) größere Ausdehnung aufweist als das mindestens eine Abstützelement (252).

10. Verbindungsmittel (100) nach einem der Ansprüche 1 bis 9, **dadurch gekennzeichnet, dass** das zweite Verbindungselement (186) mindestens zwei zweite Haltekonturen (243) umfasst, welche in Seitenwandungen (247) eines Grundkörpers (233) des zweiten Verbindungselements (186) eingeformt sind.

11. Verbindungsmittel (100) nach einem der Ansprüche 1 bis 10, **dadurch gekennzeichnet, dass** das bewegliche Halteelement (212) mindestens zwei erste Haltekonturen (217) umfasst, welche auf einander gegenüberliegenden Seiten eines Zentralabschnitts (216) des Halteelements (212) angeordnet sind.

12. Verbindungsmittel (100) nach einem der Ansprüche 1 bis 11, **dadurch gekennzeichnet,**
**dass** das bewegliche Halteelement (212) mindestens zwei erste Haltekonturen (217) umfasst,
**dass** das zweite Verbindungselement (186) mindestens zwei zweite Haltekonturen (243) umfasst, welche in Seitenwandungen (247) eines Grundkörpers (233) des zweiten Verbindungselements (186) eingeformt und mit den ersten Haltekonturen (217) hintergreifbar sind,
wobei das bewegliche Halteelement (212) zwischen den zwei Seitenwandungen (247) anordenbar oder angeordnet ist.

13. Verbindungsmittel (100) nach einem der Ansprüche 1 bis 12, **dadurch gekennzeichnet,**
**dass** das erste Verbindungselement (184) mindestens zwei Abstützelemente (252) umfasst,
**dass** das bewegliche Halteelement (212) zwischen zwei Seitenwandungen (247) eines Grundkörpers (233) des zweiten Verbindungselements (186) bewegbar ist und
**dass** die zwei Seitenwandungen (247) zwischen den mindestens zwei Abstützelementen (252) anordenbar oder angeordnet sind.

14. Verbindungsmittel (100) nach einem der Ansprüche 1 bis 13, **dadurch gekennzeichnet, dass** mindestens ein Abstützelement (252) über eine Anlegefläche (194) des ersten Verbindungselements (184) hinausragt, mit welcher das erste Verbindungselement (184) im verbundenen Zustand an dem zweiten Verbindungselement (186) anliegt.

15. Verbindungsmittel (100) nach einem der Ansprüche 1 bis 14, **dadurch gekennzeichnet, dass** mindestens ein Abstützelement (252) sich zumindest näherungsweise bündig an eine Seitenwandung (247) des ersten Verbindungselements (184) und/oder an eine Seitenwandung (247) des zweiten Verbindungselements (186) anschließt.

## Claims

1. Connecting means (100) for connecting a first component (102) and a second component (104), in particular for connecting furniture or machine parts, comprising
a first connecting element (184) which is arranged on the first component (102) in the connected state of the components (102, 104), and
a second connecting element (186) which is arranged on the second component (104) in the connected state of the components (102, 104), wherein the first connecting element (184) comprises a main body (187) and a retaining element (212) which is moveable relative to the main body (187) of the first connecting element (184) for connecting the first connecting element (184) to the second connecting element (186) in releasable manner,
wherein the moveable retaining element (212) has a first retaining contour (217),
wherein the second connecting element (186) has a second retaining contour (243) which is able to be engaged from behind by the first retaining contour (217),
**characterized in that**
the connecting means (100) comprises at least one supporting element (252) for supporting the second retaining contour (243) in the connected state of the components (102, 104), wherein the at least one supporting element (252) in the connected state of the components (102, 104) is arranged on an outer side (260) of a side wall (247) of the main body (187) of the second connecting element that is remote from the retaining element (212), wherein the second retaining contour (243) is arranged in the side wall (247).

2. Connecting means (100) in accordance with Claim 1, **characterized in that** the first connecting element (184) and/or the second connecting element (186) comprises at least one supporting element (252) for supporting the second retaining contour (243) in the connected state of the components (102, 104).

3. Connecting means (100) in accordance with either of the Claims 1 or 2, **characterized in that** at least one supporting element (252) is in the form of a supporting projection (254) of a main body (187) of the first connecting element (184) and/or as a supporting projection (254) of a main body (233) of the second connecting element (186).

4. A connecting means (100) in accordance with Claim 3, **characterized in that**, commencing from the main body (187, 233), at least one supporting projection (254) tapers in at least one direction (116, 192, 202) oriented perpendicularly to a direction of projection (196).

5. Connecting means (100) in accordance with any of the Claims 1 to 4, **characterized in that** the second retaining contour (243) is supportable by means of the at least one supporting element (252) in a transverse direction (202) of the connecting means (100).

6. A connecting means (100) in accordance with any of the Claims 1 to 5, **characterized in that** the second retaining contour (243) is supportable by means of the at least one supporting element (252) in a supporting direction (246) which is oriented substantially parallel to a rotational axis (225) of the retaining element (212).

7. Connecting means (100) in accordance with any of the Claims 1 to 6, **characterized in that** the at least one supporting element (252) is in the form of at least one supporting projection, wherein the at least one supporting projection (254) is arranged on a side (260) of the second retaining contour (243) that is remote from the retaining element (212) in the connected state of the components (102, 104).

8. A connecting means (100) in accordance with any of the Claims 1 to 7, **characterized in that** at least one supporting element (252) extends into at least one supporting recess (256) and/or into at least one supporting element seating (258) in the connected state of the components (102, 104).

9. Connecting means (100) in accordance with Claim 8, **characterized in that** the at least one supporting recess (256) and/or the at least one supporting element seating (258) is of greater extent than the at least one supporting element (252) in a longitudinal direction (192) of the connecting elements (184, 186).

10. Connecting means (100) in accordance with any of the Claims 1 to 9, **characterized in that** the second connecting element (186) comprises at least two second retaining contours (243) which are formed into side walls (247) of a main body (233) of the second connecting element (186).

11. Connecting means (100) in accordance with any of the Claims 1 to 10, **characterized in that** the moveable retaining element (212) comprises at least two first retaining contours (217) which are arranged on mutually opposite sides of a central section (216) of the retaining element (212).

12. Connecting means (100) in accordance with any of the Claims 1 to 11, **characterized in**
**that** the moveable retaining element (212) comprises at least two first retaining contours (217),
**that** the second connecting element (186) comprises at least two second retaining contours (243) which are formed into side walls (247) of a main body (233) of the second connecting element (186) and are able to be engaged from by the first retaining contours (217), wherein the moveable retaining element (212) is arrangeable or is arranged between the two side walls (247).

13. Connecting means (100) in accordance with any of the Claims 1 to 12, **characterized in**
**that** the first connecting element (184) comprises at least two supporting elements (252),
**that** the moveable retaining element (212) is movable between two side walls (247) of a main body (233) of the second connecting element (186) and
**that** the two side walls (247) are arrangable or are arranged between the at least two supporting elements (252).

14. Connecting means (100) in accordance with any of the Claims 1 to 13, **characterized in that** at least one supporting element (252) protrudes beyond a contact surface (194) of the first connecting element (184) with which the first connecting element (184) abuts on the second connecting element (186) in the connected state.

15. Connecting means (100) in accordance with any of the Claims 1 to 14, **characterized in that** at least one supporting element (252) is, to at least an approximate extent, flush with a side wall (247) of the first connecting element (184) and/or a side wall (247) of the second connecting element (186).

## Revendications

1. Moyen de liaison (100) pour la liaison d'une première pièce (102) et d'une deuxième pièce (104), plus particulièrement pour la liaison de parties de meubles ou de machines, comprenant
un premier élément de liaison (184), disposé, lorsque les pièces (102, 104) sont reliées, sur la première pièce (102) et
un deuxième élément de liaison (186), disposé, lorsque les pièces (102, 104) sont reliées, sur la deuxième pièce (104),
le premier élément de liaison (184) comprenant un corps de base (187) et un élément de maintien (212), mobile par rapport au corps de base (187) du premier élément de liaison (184), pour la liaison amovible du premier élément de liaison (184) avec le deuxième élément de liaison (186),
l'élément de maintien (212) mobile comprenant un premier contour de maintien (217),
le deuxième élément de liaison (186) comprenant un deuxième contour de maintien (243), qui peut s'emboîter avec le premier contour de maintien (217),
**caractérisé en ce que**
le moyen de liaison (100) comprend au moins un élément de soutien (252) pour le soutien du deuxième contour de maintien (243) lorsque les pièces (102, 104) sont reliées, l'au moins un élément de soutien (252) étant disposé, lorsque les pièces (102, 104) sont reliées, sur un côté extérieur (260), opposé à l'élément de maintien (212), d'une paroi latérale (247) du corps de base (187) du deuxième élément de liaison (186), le deuxième contour de maintien (243) étant disposé dans la paroi latérale (247).

2. Moyen de liaison (100) selon la revendication 1, **caractérisé en ce que** le premier élément de liaison (184) et/ou le deuxième élément de liaison (186) comprend au moins un élément de soutien (252) pour le soutien du deuxième contour de maintien (243) dans l'état relié des pièces (102, 104).

3. Moyen de liaison (100) selon l'une des revendications 1 ou 2, **caractérisé en ce qu'**au moins un élément de soutien (252) est conçu comme une saillie de soutien (254) d'un corps de base (187) du premier élément de liaison (184) et/ou comme une saillie de soutien (254) d'un corps de base (233) du deuxième élément de liaison (186).

4. Moyen de liaison (100) selon la revendication 3, **caractérisé en ce qu'**au moins une saillie de soutien (254) se rétrécit à partir du corps de base (187, 233), dans au moins une direction (116, 192, 202) orientée perpendiculairement à une direction de saillie (196).

5. Moyen de liaison (100) selon l'une des revendications 1 à 4, **caractérisé en ce que** le deuxième contour de maintien (243) peut être soutenu au moyen de l'au moins un élément de soutien (252) dans une direction transversale (202) du moyen de liaison (100).

6. Moyen de liaison (100) selon l'une des revendications 1 à 5, **caractérisé en ce que** le deuxième contour de maintien (243) peut être soutenu au moyen de l'au moins un élément de soutien (252) dans une direction de soutien (246), qui est orientée globalement parallèlement à un axe de rotation (225) de l'élément de maintien (212).

7. Moyen de liaison (100) selon l'une des revendications 1 à 6, **caractérisé en ce qu'**au moins un élément de soutien (252) est conçu comme au moins une saillie de soutien, l'au moins une saillie de soutien (254) étant disposée, lorsque les pièces (102, 104) sont reliées, sur un côté (260), opposé à l'élément de maintien (212), du deuxième contour de maintien (243).

8. Moyen de liaison (100) selon l'une des revendications 1 à 7, **caractérisé en ce qu'**au moins un élément de soutien (252) s'étend, lorsque les pièces (102, 104) sont reliées, dans au moins un évidement de soutien (256) et/ou dans au moins un logement d'élément de soutien (258).

9. Moyen de liaison (100) selon la revendication 8, **caractérisé en ce que** l'au moins un évidement de soutien (256) et/ou l'au moins un logement d'élément de soutien (258) présente une extension dans une direction longitudinale (192) des éléments de liaison (184, 186) supérieure à l'au moins un élément de soutien (252).

10. Moyen de liaison (100) selon l'une des revendications 1 à 9, **caractérisé en ce que** le deuxième élément de liaison (186) comprend au moins un deux contours de maintien (243) qui sont intégrés dans les parois latérales (247) d'un corps de base (233) du deuxième élément de liaison (186).

11. Moyen de liaison (100) selon l'une des revendications 1 à 10, **caractérisé en ce que** l'élément de maintien mobile (212) comprend au moins deux premiers contours de maintien (217) qui sont disposés sur des côtés opposés d'une portion centrale (216) de l'élément de maintien (212).

12. Moyen de liaison (100) selon l'une des revendications 1 à 11, **caractérisé en ce que**
l'élément de maintien mobile (212) comprend au moins deux premiers contours de maintien (217),
le deuxième élément de liaison (186) comprend au moins deux deuxièmes contours de maintien (243), qui sont intégrés dans les parois latérales (247) d'un corps de base (233) du deuxième élément de liaison (186) et peuvent s'emboîter avec les premiers contours de maintien (217),
l'élément de maintien mobile (212) pouvant être disposé ou étant disposé entre les deux parois latérales (247).

13. Moyen de liaison (100) selon l'une des revendications 1 à 12, **caractérisé en ce que**
le premier élément de liaison (184) comprend au moins deux éléments de soutien (252),
l'élément de maintien mobile (212) est mobile entre deux parois latérales (247) d'un corps de base (233) du deuxième élément de liaison (186) et
les deux parois latérales (247) peuvent être disposées ou sont disposées entre les au moins deux éléments de soutien (252).

14. Moyen de liaison (100) selon l'une des revendications 1 à 13, **caractérisé en ce qu'**au moins un élément de soutien (252) dépasse d'une surface d'appui (194) du premier élément de liaison (184), avec lequel le premier élément de liaison (184) s'appuie contre le deuxième élément de liaison (186) dans l'état relié.

15. Moyen de liaison (100) selon l'une des revendications 1 à 14, **caractérisé en ce qu'**au moins un élément de soutien (252) se raccorde au moins approximativement en affleurement à une paroi latérale (247) du premier élément de liaison (184) et/ou à une paroi latérale (247) du deuxième élément de liaison (186).
